# FASCICULE DE BREVET EUROPEEN

(11) **EP 3 755 887 B1**
(45) Date de publication et mention de la délivrance du brevet: **07.08.2024**
(21) Numéro de dépôt: 19711969.6
(22) Date de dépôt: 19.02.2019
(51) Int. Cl.: F01D 25/28, F02K 1/76, F02C 7/20, B64F 5/50

(54) **ENSEMBLE PROPULSIF COMPORTANT DES POINTS DE LEVAGE DISPOSÉS SUR DES SUPPORTS DE VÉRINS D'INVERSEUR DE POUSSÉE**
ANTRIEBSEINHEIT MIT AN BALKEN ANGEORDNETEN HUBPUNKTEN FÜR SCHUBUMKEHRSTELLGLIEDER
PROPULSION UNIT HAVING LIFTING POINTS ARRANGED ON BEAMS FOR THRUST REVERSER ACTUATORS

(30) Priorité: 20.02.2018 FR 1851444
(43) Date de publication de la demande: 30.12.2020
(73) Titulaire: Safran Nacelles, 76700 Gonfreville-l'Orcher (FR); SAFRAN AIRCRAFT ENGINES, 75015 Paris (FR)
(72) Inventeur: BOILEAU, Patrick, 76700 GONFREVILLE L'ORCHER (FR); GARNAUD, Quentin, 77550 MOISSY-CRAMAYEL (FR); HELLEGOUARCH, Antoine Elie, 77550 MOISSY-CRAMAYEL (FR); FERRIER, Gina, 76700 GONFREVILLE L'ORCHER (FR)
(74) Mandataire: Germain Maureau
(86) Numéro de dépôt international: PCT/FR2019/050379
(87) Numéro de publication internationale: WO 2019/162610

(56) Documents cités:
- US-A1- 2011 265 327
- US-A1- 2015 113 787

## Description

La présente invention concerne un ensemble propulsif comprenant une nacelle et un turboréacteur comportant un inverseur de poussée à grilles et des points de levage de cet ensemble.

Les turboréacteurs de motorisation des aéronefs disposés dans une nacelle, reçoivent de l'air frais venant du côté avant, et rejettent du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, engendrant une poussée élevée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef. Le document FR2992292A1 montre un ensemble propulsif selon l'art antérieur.

Un type d'inverseur de poussée à grilles connu, présenté notamment par le document US-A1-20160160799, comporte des grilles d'inversion formant une couronne disposée sous des capots de carter de soufflante (ce carter étant souvent appelé « carter fan »), entourant la veine annulaire, qui sont reliées à des capots mobiles arrière coulissant axialement vers l'arrière sous l'effet de vérins présentant une extrémité fixée sur l'extérieur de la veine annulaire du turboréacteur.

Dans une position fermée de l'inverseur pour un flux direct, les capots mobiles arrière ferment des passages latéraux vers l'extérieur formés autour de la veine annulaire.

Dans une position ouverte de l'inverseur pour un flux inversé, les capots mobiles arrière reculent sur des guidages longitudinaux, en entraînant les grilles qui se positionnent dans les passages d'airs radiaux. Des volets de fermeture ferment au moins partiellement le flux secondaire en arrière de ces passages, en refoulant le flux radialement vers les grilles qui inversent la poussée.

Par ailleurs les turboréacteurs comportent généralement des points de levage disposés sur le pourtour de la veine annulaire, sous les capots extérieurs, formant des points d'ancrage résistants recevant des interfaces de manutention pour soulever et transporter le turboréacteur et des éléments de la nacelle.

En particulier on peut former un point de levage de chaque côté latéral du moteur, en limite des grilles d'inverseur.

Le contour de la veine annulaire du turboréacteur doit alors présenter des ancrages résistants pour réaliser d'une part les supports des extrémités fixes des vérins de commande de l'inverseur de poussée, et d'autre part les points de levage pour la manutention, avec les renforts nécessaires afin d'obtenir une résistance suffisante face aux efforts développés sur ces points, ce qui augmente l'encombrement, la masse et les coûts du turboréacteur et des équipements de la nacelle.

De plus l'accès aux points de levage nécessite un démontage plus ou moins complet des capots extérieurs de l'inverseur recouvrant ces points, ce qui prend du temps et complexifie les procédés d'intervention.

La présente invention a notamment pour but d'éviter ces inconvénients de la technique antérieure.

Elle propose à cet effet un ensemble propulsif comprenant une nacelle et un turboréacteur à double flux, comportant un inverseur de poussée à grilles équipé de grilles mobiles d'inversion de poussée disposées autour d'une veine annulaire d'air frais du turboréacteur, et des vérins disposés autour de la veine annulaire, et présentant chacun une extrémité avant fixée au turboréacteur, chaque vérin présentant en outre une extrémité arrière qui entraîne en translation des capots arrière mobiles et des grilles pour ouvrir dans la veine annulaire des passages radiaux recevant ces grilles, et comportant des points de levage du turboréacteur disposés autour de la veine annulaire d'air frais du turboréacteur, cet ensemble propulsif étant remarquable en ce qu'au moins un des points de levage est formé sur un support de fixation d'une extrémité avant d'un vérin.

Un avantage de cette nacelle est qu'en utilisant les supports de fixation d'extrémités fixes des vérins de l'inverseur, on met en commun des éléments fortement rigides déjà installés dans la nacelle pour l'inverseur de poussée, disposés autour de la veine annulaire, pour former les points de levage. De cette manière on évite le renforcement d'autres zones autour de la veine annulaire, qu'il faudrait réaliser pour installer des points de levage distincts des ferrures de fixation des vérins. On réduit la masse, l'encombrement et le coût de la nacelle.

De plus les capots des nacelles comportent généralement des trappes de visite pour accéder aux vérins de l'inverseur de poussée, afin d'effectuer des opérations de maintenance. Une disposition des points de levage à ces endroits permet d'utiliser des trappes de visites existantes pour accéder à ces points, et y fixer des interfaces de manutention.

L'ensemble propulsif comportant un turboréacteur et une nacelle selon l'invention peut comporter une ou plusieurs des caractéristiques suivantes, qui peuvent être combinées entre elles.

En particulier, chaque point de levage du turboréacteur peut comporter une ou plusieurs surfaces ou interfaces de fixation destinées au montage d'un outillage de manutention et hissage.

Dans ce cas, avantageusement chaque point de levage comporte, de chaque côté du vérin, au moins une interface de fixation formée sur ledit support et destinée au montage d'un outillage de manutention et hissage.

De cette manière on répartit et on équilibre les efforts sur le support, par rapport à l'axe du vérin.

Avantageusement, au moins une dite interface de fixation présente une surface plate s'étendant tangentiellement par rapport à l'axe de la nacelle et comportant des perçages de fixation d'une interface de manutention.

Avantageusement, le support de fixation d'une extrémité avant d'un vérin comprend :
- une partie centrale reliée solidairement à une virole d'un carter moteur disposé en aval d'un carter de soufflante du turboréacteur, l'extrémité avant du vérin étant fixée à cette partie centrale, et
- des parties latérales solidaires de la partie centrale et comprenant chacune au moins une interface de fixation.

Avantageusement, la partie centrale du support est fixée à un cadre formant une bride fixée à la virole dudit carter moteur.

Avantageusement, ledit carter moteur est constitué par une virole extérieure d'un carter intermédiaire qui comprend des aubes de redressement du flux de la veine annulaire d'air frais du turboréacteur.

Avantageusement, la partie centrale du support est fixée en outre au carter de soufflante.

Avantageusement, la nacelle embarque sur chacun de ses deux côtés latéraux un point de levage disposé sur une ferrure de vérin, ladite ferrure de vérin étant montée sur un quadrant supérieur droite ou gauche de la nacelle

On réalise de manière équilibrée un levage de la nacelle à partir de ces positions.

Avantageusement, chaque point de fixation est disposé derrière une trappe formée sur un capot de la nacelle.

Avantageusement, au moins une interface de fixation comprend un assemblage de chape et d'axes.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 et 2 présentent une vue d'ensemble et une vue de détail d'un ensemble de nacelle de turboréacteur selon l'art antérieur, comportant des points de levage ;
- les figures 3a et 3b sont des vues de l'avant de l'ensemble propulsif selon l'invention, en coupe transversale passant par les points de levage, selon deux variantes de réalisation possibles ;
- la figure 4 est une vue extérieure d'un vérin d'actionnement de l'inverseur de poussée de la nacelle de cet ensemble propulsif, l'avant de l'ensemble propulsif étant indiqué par flèche AV ;
- la figure 5 est une vue en coupe axiale passant au niveau de ce vérin, l'avant de l'ensemble propulsif étant indiqué par flèche AV ; et
- la figure 6 présente cet ensemble propulsif soulevé par ses points de fixation, disposé au-dessus d'un chariot de transport.

Pour plus de clarté, les éléments identiques ou similaires sont repérés par des signes de référence identiques sur l'ensemble des figures.

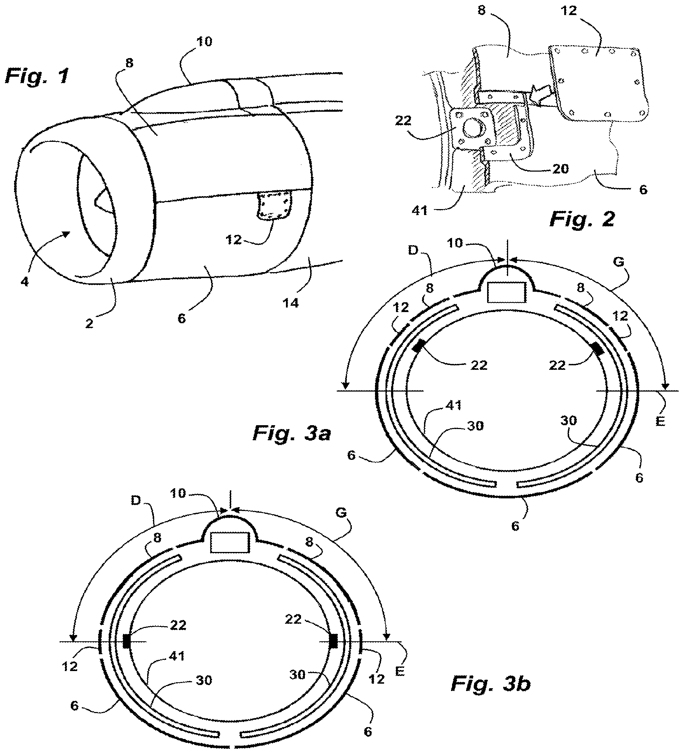

Les figures 1 et 2 présentent un ensemble propulsif avec une nacelle et un turboréacteur à double flux supportée par un pylône disposé à 12 heures (cette notion d'heure s'entendant par rapport au cadran d'une horloge, correspondant à une section transversale de l'ensemble propulsif), comportant à l'avant un capot circulaire d'entrée d'air 2 entourant une entrée d'air 4.

Une partie avant de la nacelle, formant axialement un tronçon de capotage disposé dans le prolongement du capot d'entrée d'air 2, comporte de chaque côté un capot de soufflante inférieur 6 relié à un capot de soufflante supérieur 8. Un capot de pylône 10 reliant sur le dessus les deux capots supérieurs 8, présente un profilage recouvrant le pylône.

La nacelle comporte en arrière des capots de soufflante 6, 8, des capots arrière mobiles 14 qui reculent sous l'effet de vérins disposés longitudinalement, pour ouvrir des passages radiaux formés autour de la veine annulaire d'air froid. Des grilles d'inversion disposées en amont des passages radiaux, sous les capots de soufflante 6, 8, coulissent avec les capots mobiles arrière 14 pour venir dans les passages radiaux de la veine annulaire afin de diriger le flux d'air froid vers l'avant.

Un point de levage 22 est fixé sur un carter de soufflante 41 du turboréacteur de chaque côté de l'ensemble propulsif, sur des supports propres indépendants des supports des vérins de l'inverseur de poussée.

Les figures 3a, 3b, 4 et 5 présentent un ensemble propulsif selon l'invention dont la nacelle comporte au moins un capot 6 disposé dans la partie inférieure de cette nacelle, et deux capots supérieurs 8 couvrant les côtés de la nacelle.

Les grilles d'inversion de poussée 30 sont reliées en aval à la structure mobile de l'inverseur de poussée entraînée par des vérins 40 d'ouverture de l'inverseur de poussée.

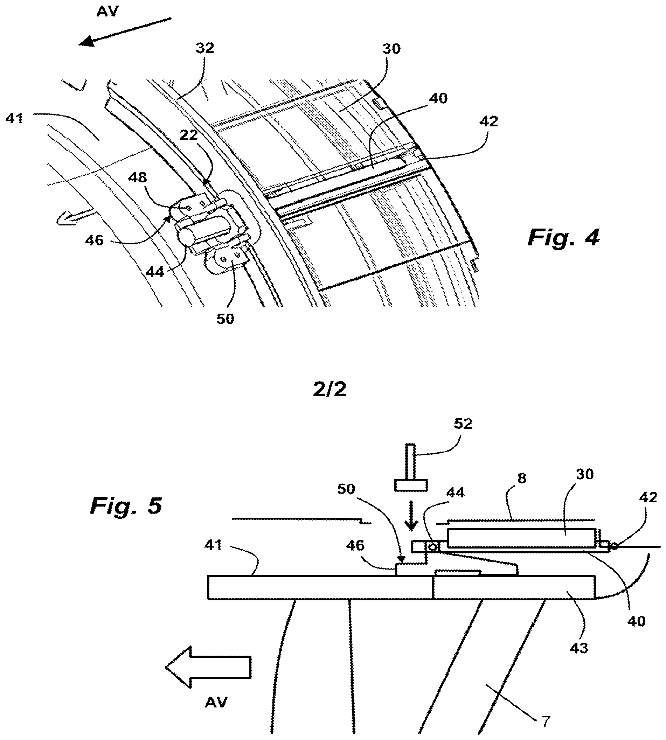

Ces vérins 40 comportent chacun une extrémité avant 44 fixée au carter de soufflante 41 et à une virole extérieure d'un carter intermédiaire 43 (voir figure 5) par l'intermédiaire d'un support pour obtenir une bonne rigidité. De façon connue en soi, le carter intermédiaire 43 comprend des aubes 7 de redressement du flux de la veine annulaire d'air frais du turboréacteur. Ces aubes 7 relient entre elles une virole intérieure et une virole extérieure du carter intermédiaire. Dans ce qui suit, un support 46 pour une extrémité avant 44 d'un vérin 40 est aussi appelé support avant 46. Chaque vérin 40 comporte en outre une extrémité arrière 42 fixée à un cadre mobile entraînant les grilles d'inversion 30 et les capots mobiles arrière 14.

En particulier deux vérins 40 sont disposés un peu au-dessus d'un diamètre horizontal de l'ensemble propulsif, à environ 2 heures et 10 heures, c'est-à-dire dans les quadrants supérieurs D et G, comme cela est visible sur la figure 3a.

Chaque capot supérieur 8 comporte une trappe 12 permettant d'accéder à l'extrémité avant d'un vérin 40 disposée derrière pour effectuer des opérations de maintenance sur ce vérin.

Le support avant 46 est fixé sur le carter de soufflante 41 et sur la virole de carter intermédiaire 43, en présentant une rigidité élevée lui permettant de résister aux efforts de détente et de traction exercés par le vérin 40, pour s'opposer en particulier aux forces aérodynamiques s'appliquant sur les capots arrière mobiles 14, les volets de fermeture de cette veine et les grilles d'inversion 30 lors d'un déploiement de l'inverseur de poussée.

En variante, le support avant 46 pourrait aussi être fixé sur la seule virole de carter intermédiaire 43, notamment lorsque que le carter de soufflante 41 est réalisé en matériau composite : dans ce cas en effet, il faudrait prévoir des inserts dans le carter 41, ce qui est plus complexe à fabriquer.

Le support avant 46 présente de chaque côté de l'extrémité avant du vérin 44 une surface plate 50 disposée tangentiellement par rapport à l'axe de l'ensemble propulsif, comportant deux perçages 48 alignés dans la direction longitudinale, pour former un point de levage 22. Les deux surfaces plates 50 de chaque support avant 46 constituent une face de fixation d'une interface de manutention 52, les perçages 48 permettant un serrage sur cette face, afin de centrer et de fixer de manière stable cette interface sur l'ensemble propulsif.

En variante, les supports avant 46 formant points de levage pourraient aussi être disposés dans d'autres zones des quadrants supérieurs droit D et gauche G, et en particulier à 3 heures et 9 heures, c'est-à-dire le long de la ligne d'équateur E, comme cela est visible sur la figure 3b.

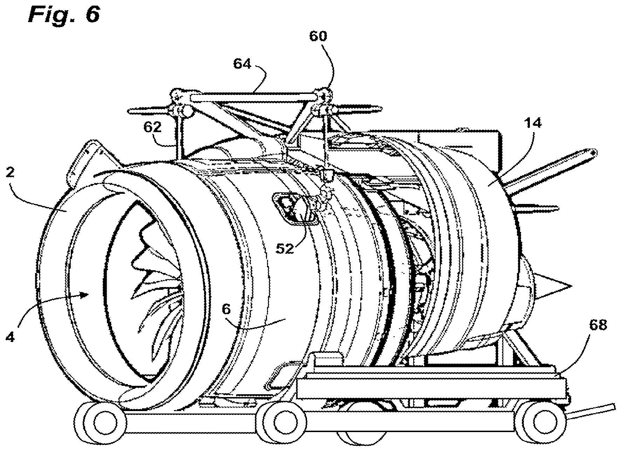

La figure 6 présente après la dépose des trappes 12 et l'ouverture de la partie de la nacelle restant sur l'avion, la fixation d'une interface de manutention 52 sur chaque point de levage 22. On notera que les interfaces de manutention 52 sont rapidement fixées sur la nacelle, sans ouvrir ou déposer des capots extérieurs.

Un palan de levage 60 comporte deux suspensions 62 reliées par une barre horizontale 64, présentant chacune à la base un crochet venant se fixer sur une interface de manutention 52. Un autre point d'accrochage sur le palan se trouve à l'arrière du turboréacteur. On peut ensuite soulever l'ensemble propulsif de manière sécurisée, pour le poser sur un chariot de transport 68.

La traction verticale sur les interfaces de manutention 52 applique un effort sur les supports avant 46, qui ne s'ajoute pas simultanément aux efforts exercés dessus par le vérin 40 pendant le fonctionnement de l'inverseur de poussée. De cette manière on ne cumule pas en même temps ces deux types d'effort sur les supports 46, ce qui évite d'appliquer dessus des contraintes élevées, et de les dimensionner pour un cumul d'effort.

On réalise ainsi avec peu de modifications de nacelles existantes, de manière simple et économique, des points de levage 22 qui sont faciles à utiliser.

L'ajout de masse sur les ferrures de vérins afin de former les points de levage 22 avec leurs interfaces de fixation 50 peut être relativement limité, de telle sorte que le bilan de masse pour l'ensemble propulsif est favorable par rapport à une solution existante dans laquelle des éléments d'ancrage spécifiques formant des points de levage sont prévus sur le pourtour de la veine annulaire.

En effet, grâce à l'invention, ces éléments d'ancrage spécifiques peuvent être supprimés, la masse ainsi retirée étant supérieure à la masse ajoutée sur les ferrures de vérins.

Le dimensionnement et la fixation des ferrures de vérins existantes sur le turboréacteur sont généralement suffisants pour procurer une structure apte à supporter les efforts de levage, de telle sorte qu'un renforcement des ferrures ou de leurs moyens de fixation sur le turboréacteur ne sera généralement pas nécessaire.

En conséquence, l'ajout de masse sur les ferrures résultera essentiellement de la formation des points de levage.

## Revendications

1. Ensemble propulsif comprenant une nacelle et un turboréacteur à double flux, comportant un inverseur de poussée à grilles équipé de grilles mobiles d'inversion de poussée (30) disposées autour d'une veine annulaire d'air frais du turboréacteur, et des vérins (40) disposés autour de la veine annulaire, et présentant chacun une extrémité avant fixée au turboréacteur, chaque vérin présentant en outre une extrémité arrière (42) qui entraîne en translation des capots arrière mobiles (14) et des grilles (30) pour ouvrir dans la veine annulaire des passages radiaux recevant ces grilles (30), et comportant des points de levage du turboréacteur disposés autour de la veine annulaire d'air frais du turboréacteur, cet ensemble propulsif étant **caractérisé en ce qu'**au moins un des points de levage (22) est formé sur un support (46) de fixation d'une extrémité avant (44) d'un vérin (40).

2. Ensemble selon la revendication 1, **caractérisé en ce que** chaque point de levage (22) comporte, de chaque côté du vérin (40), au moins une interface de fixation (50) formée sur ledit support (46) et destinée au montage d'un outillage de manutention et hissage.

3. Ensemble selon la revendication 2, **caractérisé en ce qu'**au moins une dite interface de fixation (50) présente une surface plate s'étendant tangentiellement par rapport à l'axe de la nacelle et comportant des perçages (48) de fixation d'une interface de manutention (52).

4. Ensemble selon l'une des revendications 2 ou 3, **caractérisé en ce que** le support (46) de fixation d'une extrémité avant (44) d'un vérin comprend :
- une partie centrale reliée solidairement à une virole d'un carter moteur (43) disposé en aval d'un carter de soufflante (41) du turboréacteur, l'extrémité avant (44) du vérin étant fixée à cette partie centrale, et
- des parties latérales solidaires de la partie centrale et comprenant chacune au moins une interface de fixation (50).

5. Ensemble selon la revendication 4, **caractérisé en ce que** la partie centrale du support (46) est fixée à un cadre (32) formant une bride fixée à la virole dudit carter moteur 43).

6. Ensemble selon l'une quelconque des revendications 4 et 5, **caractérisé en ce que** ledit carter moteur (43) est constitué par une virole extérieure d'un carter intermédiaire qui comprend des aubes (7) de redressement du flux de la veine annulaire d'air frais du turboréacteur.

7. Ensemble selon l'une quelconque des revendications 4 à 6, **caractérisé en ce que** la partie centrale du support (46) est fixée en outre au carter de soufflante (41).

8. Ensemble selon l'une quelconque des revendications précédentes, **caractérisé en ce que** la nacelle embarque sur chacun de ses deux côtés latéraux un point de levage disposé sur une ferrure de vérin, ladite ferrure de vérin étant montée sur un quadrant supérieur droite ou gauche de la nacelle.

9. Ensemble selon l'une quelconque des revendications précédentes, **caractérisé en ce que** chaque point de fixation (22) est disposé derrière une trappe (12) formée sur un capot (8) de la nacelle.

10. Ensemble selon la revendication 2, **caractérisé en ce qu'**au moins une interface de fixation comprend un assemblage de chape et d'axes.

## Patentansprüche

1. Antriebseinheit, die eine Gondel und ein zweistrahliges Turbostrahltriebwerk umfasst, das eine Kaskaden-Schubumkehrvorrichtung, die mit beweglichen Schubumkehrkaskaden (30) ausgestattet ist, die um einen ringförmigen Frischluft-Strömungsweg des Turbostrahltriebwerks herum angeordnet sind, und Zylinder (40) enthält, die um den ringförmigen Strömungsweg herum angeordnet sind und jeweils ein vorderes Ende aufweisen, das am Turbostrahltriebwerk befestigt ist, wobei jeder Zylinder ferner ein hinteres Ende (42) aufweist, das durch Translation die beweglichen hinteren Klappen (14) und Kaskaden (30) antreibt, um im ringförmigen Strömungsweg radiale Durchgänge zu öffnen, die die Kaskaden (30) aufnehmen, und Hebepunkte des Turbostrahltriebwerks enthalten, die um den ringförmigen Frischluft-Strömungsweg des Turbostrahltriebwerks herum angeordnet sind, wobei die Antriebseinheit **dadurch gekennzeichnet ist, dass** mindestens einer der Hebepunkte (22) an einer Halterung (46) zum Befestigen eines vorderen Endes (44) eines Zylinders (40) ausgebildet ist.

2. Einheit nach Anspruch 1, **dadurch gekennzeichnet, dass** jeder Hebepunkt (22) auf jeder Seite des Zylinders (40) mindestens eine an der Halterung (46) ausgebildete Befestigungsschnittstelle (50) enthält, die zur Montage eines Handhabungs- und Hebewerkzeugs bestimmt ist.

3. Einheit nach Anspruch 2, **dadurch gekennzeichnet, dass** die mindestens eine Befestigungsschnittstelle (50) eine flache Oberfläche aufweist, die sich in Bezug zu einer Achse der Gondel tangential erstreckt und Bohrungen (48) zum Befestigen einer Handhabungsschnittstelle (52) enthält.

4. Einheit nach einem der Ansprüche 2 oder 3, **dadurch gekennzeichnet, dass** die Halterung (46) zum Befestigen eines vorderen Endes (44) eines Zylinders Folgendes umfasst:
- einen zentralen Abschnitt, der fest mit einem Mantel eines Motorgehäuses (43) verbunden ist, das stromabwärts eines Gebläsegehäuses (41) des Turbostrahltriebwerks angeordnet ist, wobei das vordere Ende (44) des Zylinders am zentralen Abschnitt befestigt ist, und
- seitliche Abschnitte, die fest mit dem zentralen Abschnitt verbunden sind und jeweils mindestens eine Befestigungsschnittstelle (50) umfassen.

5. Einheit nach Anspruch 4, **dadurch gekennzeichnet, dass** der zentrale Abschnitt der Halterung (46) an einem Rahmen (32) befestigt ist, der einen Flansch bildet, der am Mantel des Motorgehäuses (43) befestigt ist.

6. Einheit nach einem der Ansprüche 4 und 5, **dadurch gekennzeichnet, dass** das Motorgehäuse (43) aus einem Außenmantel eines Zwischengehäuses besteht, der Schaufeln (7) zum Begradigen der Strömung des ringförmigen Frischluft-Strömungswegs des Turbostrahltriebwerks umfasst.

7. Einheit nach einem der Ansprüche 4 bis 6, **dadurch gekennzeichnet, dass** der zentrale Abschnitt der Halterung (46) ferner am Gebläsegehäuse (41) befestigt ist.

8. Einheit nach einem der vorhergehenden Ansprüche, **dadurch gekennzeichnet, dass** die Gondel an jeder ihrer beiden seitlichen Seiten einen Hebepunkt einbettet, der an einem Zylinderbeschlag angeordnet ist, wobei der Zylinderbeschlag an einem rechten oder linken oberen Quadranten der Gondel montiert ist.

9. Einheit nach einem der vorhergehenden Ansprüche, **dadurch gekennzeichnet, dass** jeder Befestigungspunkt (22) hinter einer Luke (12) angeordnet ist, die an einer Klappe (8) der Gondel ausgebildet ist.

10. Einheit nach Anspruch 2, **dadurch gekennzeichnet, dass** mindestens eine Befestigungsschnittstelle eine Anordnung von Gabelköpfen und Achsen umfasst.

## Claims

1. A propulsion unit comprising a nacelle and a bypass turbojet engine, including a cascade thrust reverser equipped with movable thrust reverser cascades (30) disposed around an annular flow path of fresh air of the turbojet engine, and cylinders (40) disposed around the annular flow path, and each having a front end fastened to the turbojet engine, each cylinder further having a rear end (42) which drives in translation movable rear cowls (14) and cascades (30) to open, in the annular flow path, radial passages receiving these cascades (30), and including lifting points of the turbojet engine disposed around the annular flow path of fresh air of the turbojet engine, this propulsion unit being **characterized in that** at least one of the lifting points (22) is formed on a support (46) for fastening a front end (44) of a cylinder (40).

2. The unit according to claim 1, **characterized in that** each lifting point (22) includes, on each side of the cylinder (40), at least one fastening interface (50) formed on said support (46) and intended for mounting a handling and hoisting tooling.

3. The unit according to claim 2, **characterized in that** at least one so-called fastening interface (50) has a flat surface extending tangentially relative to the axis of the nacelle and including bores (48) for fastening a handling interface (52).

4. The unit according to any of claims 2 or 3, **characterized in that** the support (46) for fastening a front end (44) of a cylinder comprises:
- a central portion securely connected to a shell of a motor casing (43) disposed downstream of a fan casing (41) of the turbojet engine, the front end (44) of the cylinder being fastened to this central portion, and
- lateral portions secured to the central portion and each comprising at least one fastening interface (50).

5. The unit according to claim 4, **characterized in that** the central portion of the support (46) is fastened to a frame (32) forming a flange fastened to the shell of said motor casing (43).

6. The unit according to any one of claims 4 and 5, **characterized in that** said motor casing (43) is constituted by an outer shell of an intermediate casing which comprises blades (7) for straightening the flow of the annular flow path of fresh air of the turbojet engine.

7. The unit according to any one of claims 4 to 6, **characterized in that** the central portion of the support (46) is further fastened to the fan casing (41).

8. The unit according to any one of the preceding claims, **characterized in that** the nacelle embeds, on each of the two lateral sides thereof, a lifting point disposed on a cylinder fitting, said cylinder fitting being mounted on a right or left upper quadrant of the nacelle.

9. The unit according to any one of the preceding claims, **characterized in that** each fastening point (22) is disposed behind a hatch (12) formed on a cowl (8) of the nacelle.

10. The unit according to claim 2, **characterized in that** at least one fastening interface comprises an assembly of clevises and axes.
